# FASCICULE DE BREVET EUROPEEN

(11) **EP 2 283 101 B1**
(45) Date de publication et mention de la délivrance du brevet: **17.02.2016**
(21) Numéro de dépôt: 09772676.4
(22) Date de dépôt: 14.05.2009
(51) Int. Cl.: C09K 3/30, C09K 5/04, C08J 9/14

(54) **COMPOSITIONS A BASE D'HYDROFLUOROOLEFINES**
HYDROFLUOROLEFINZUSAMMENSETZUNGEN
HYDROFLUOROOLEFIN COMPOSITIONS

(30) Priorité: 11.06.2008 FR 0853859
(43) Date de publication de la demande: 16.02.2011
(60) Demande divisionnaire: 13162858.8
(73) Titulaire: Arkema France, 92700 Colombes (FR)
(72) Inventeur: RACHED, Wissam, F-69630 Chaponost (FR)
(74) Mandataire: Dang, Doris
(86) Numéro de dépôt international: PCT/FR2009/050888
(87) Numéro de publication internationale: WO 2010/000993

(56) Documents cités:
- WO-A-2006/094303
- WO-A-2008/009922
- DE-U1-202007 008 291

## Description

La présente invention concerne des compositions renfermant des hydrofluorooléfines et leurs utilisations comme fluides de transfert de chaleur, agents d'expansion, solvants et aérosols.

Les problèmes posés par les substances appauvrissant la couche d'ozone atmosphérique (ODP : ozone depletion potential) ont été traités à Montréal où a été signé le protocole imposant une réduction de la production et de l'utilisation des chlorofluorocarbures (CFC). Ce protocole a fait l'objet d'amendements qui ont imposé l'abandon des CFC et étendu la réglementation à d'autres produits, dont les hydrochlorofluorocarbones (HCFC).

L'industrie de la réfrigération et de la production d'air conditionné a beaucoup investi dans la substitution de ces fluides frigorigènes et c'est ainsi que les hydrofluorocarbures (HFC) ont été commercialisés.

Les (hydro)chlorofluorocarbures utilisés comme agents d'expansion ou solvants ont également été substitués par des HFC.

Dans l'industrie automobile, les systèmes de climatisation des véhicules commercialisés dans de nombreux pays sont passés d'un fluide frigorigène au chlorofluorocarbure (CFC-12) à celui de l'hydrofluorocarbure (1,1,1,2 tetrafluoroéthane : HFC-134a), moins nocif pour la couche d'ozone. Cependant, au regard des objectifs fixés par le protocole de Kyoto, le HFC-134a (GWP = 1300) est considéré comme ayant un pouvoir de réchauffement élevé. La contribution à l'effet de serre d'un fluide est quantifiée par un critère, le GWP (Global Warming Potentials) qui résume le pouvoir de réchauffement en prenant une valeur de référence de 1 pour le dioxyde de carbone.

Le dioxyde de carbone étant non-toxique, ininflammable et ayant un très faible GWP, a été proposé comme fluide frigorigène des systèmes de climatisation en remplacement du HFC-134a. Toutefois, l'emploi du dioxyde de carbone présente plusieurs inconvénients, notamment liés à la pression très élevée de sa mise en oeuvre en tant que fluide frigorigène dans les appareils et technologies existants.

Le document WO2004/037913 divulgue l'utilisation des compositions comprenant au moins un fluoroalcène ayant trois ou quatre atomes de carbone, notamment le pentafluoropropène et le tetrafluoropropène, de préférence ayant un GWP au plus de 150, comme fluides de transfert de chaleur.

Le document WO 2005/105947 renseigne l'ajout au tetrafluoropropène, de préférence le 1,3,3,3 tetrafluoropropène, d'un co-agent d'expansion tels que le difluoromethane, le pentafluoroéthane, le tetrafluoroéthane, le difluoroéthahe, l'heptafluoropropane, l'hexafluoropropane, le pentafluoropropene, le pentafluorobutane, l'eau et le dioxyde de carbone.

Le document WO 2006/094303 divulgue des compositions binaires du 2,3,3,3 tetrafluoropropène (1234yf) avec du difluorométhane (HFC-32), et du 2,3,3,3 tetrafluoropropène avec, du 1,1,1,2 tetraffuoroéthane (HFC-134a).

Des mélanges quaternaires comprenant du 1,1,1,2,3 pentafluoropropène (1225ye) en combinaison avec du difluorométhane, du 2,3,3,3 tetrafluotopropène et du HFC-134a, ont été divulgués dans ce document. Cependant, le 1,1,1.2,3 pentafluotopropène est toxique.

Des mélanges quaternaires comprenant du 2,3,3,3 tetrafluoropropène en combinaison avec du iodotrifluorométhaine (CF₃I), du HFC-32 et du HFC-134a ont également été divulgués dans le document WO 2006/094303. Toutefois, le CF₃l possède un ODP non nul et pose des problèmes de stabilité et de corrosion.

Le document WO 2008/009922 divulgue des compositions quaternaires contenant du 2,3,3,3-tétrafluoropropène, du HFC-134a, du HFC-32 et l'isomère Z- du 1,2,3,3,3-pentafluoropropène.

Le document DE:20 2007 008291 décrit une composition constituée de 1 à 9 partie(s) du HFC-32, de 4 à 8 parties du HFC-134a, de 4 à 52 parties du 2,3,3,3-tétrafluoropropène et de 39 à 78 parties de l'isomère. E- du 1,2,3,3,3-pentafluoropropène.

La demanderesse a maintenant mis au point des compositions renfermant des hydrofluoropropènes ne présentant pas les inconvénients précités et ayant à la fois un ODP nul et un GWP inférieur à celui des fluides de transfert de Chaleur existants comme le R404A (mélange ternaire du pentafluoroéthane (44 % en poids), trifluoroéthane (52 % en poids) et HFC-134a (4 % en poids)) et R407C (mélange ternaire du HFC-134a. (52 % en poids), HFC-125 (25 % en poids) et HFC-32 (23 % en poids)).

Les compositions selon la présente invention sont caractérisées en ce qu'elles contiennent essentiellement de 5 à 65 % en poids, de préférence de 5 à 15 % en poids du 2,3,3,3 tetrafluoropropène de 5 à 70 % en poids, de préférence de 40 à 60 % en poids du HFC-134a et de 25 à 42 % en poids du HFC-32.

Selon un mode préféré de l'invention, les compositions comprennent de 25 à 42 % en poids du HFC-32, de 30 à 55 % en poids du 2,3,3,3 tetrafluoropropène et de 20 à 35 % en poids du HFC-134a.

Les compositions comprenant 40 % en poids du HFC-32, 10 % en poids du 2,3,3,3 tetrafluoropropène et 50 % en poids du HFC-134a sont particulièrement intéressantes.

Sont également intéressantes, les compositions comprenant 40 % en poids du HFC-32, 40 % en poids du 2,3,3,3 tetrafluoropropène et 20 % en poids du HFC-134a.

Avantageusement, les compositions selon la présente invention contiennent essentiellement du 2,3,3,3 tetrafluoropropène, du HFC-134a et du HFC-32, comme hydrofluorocarbures (saturés ou insaturés).

Les compositions selon la présente invention peuvent être utilisées comme fluides de transfert de chaleur, de préférence dans les systèmes à compression. Elles conviennent particulièrement pour la réfrigération, de préférence en remplacement du R-404 A et du HCFC-22 (chlorodifluorométhane).

Les compositions selon la présente invention conviennent également pour les systèmes à compression d'air conditionné et de chauffage, notamment les pompes à chaleur, de préférence en remplacement du R407C et du HFC-134a.

Les compositions selon la présente invention peuvent comprendre un stabilisant du 2,3,3,3 tetrafluoropropène. Le stabilisant représente au plus 5 % en poids par rapport à la composition totale.

Comme stabilisants, on peut citer notamment le nitromethane, l'acide ascorbique, l'acide terephtalique, les azoles tels que le tolutriazole ou le benzotriazole, les composés phénoliques tels que le tocopherol, l'hydroquinone, le t-butyl hydroquinone, le 2,6-di-ter-butyl-4-methylphenol, les epoxydes (alkyl éventuellement fluoré ou perfluoré ou alkényl ou aromatique) tels que les n-butyl glycidyl ether, hexanediol diglycidyl ether, allyl glycidyl ether, butylphenylglycidyl ether, les phosphites, les phosphates, les phosphonates, les thiols et lactones.

Les compositions selon la présente invention peuvent comprendre des lubrifiants tels que l'huile minérale, alkylbenzène, le polyalkylène glycol et le polyvinyl éther.

Les compositions selon la présente invention sont en outre utilisables comme agents d'expansion, aérosols et solvants.

### PARTIE EXPERIMENTALE

Les performances des compositions selon l'invention en réfrigération sont données dans le Tableau 1. Les valeurs des constituants (1234yf/32/134a) pour chaque composition sont données en pourcentage en poids.

Les paramètres tels que le coefficient de performance (COP), la capacité volumétrique (capacité) et la haute pression (Cond P) sont déterminants, lorsqu'il s'agit d'un remplacement avec des équipements existants. Pour le R404A la pression nominale de fonctionnement est de 1829 kPa, la capacité est de 1471 kJ/m³ et le COP est de 1,8 dans les conditions de fonctionnement suivantes.

| | |
|---|---|
| Température d'évaporation | : -20°C |
| Température de condensation | : 40°C |
| Température entrée compresseur | : -5°C |
| Température du liquide sous refroidi | : 35°C |
| Rendement isentropique du compresseur | : 70 % |

Evap P : pression à l'évaporateur
Cond P : pression au condenseur
Taux : le taux de compression
T sortie comp : température à la sortie compresseur
COP : coefficient de performance et est défini lorsqu'il s'agit de la réfrigération comme étant le rapport de la puissance froide utile fournie par le système sur la puissance apportée ou consommée par le système.

Les compositions selon la présente invention dans les mêmes conditions de fonctionnement que le R404A ont une capacité volumétrique et un COP équivalents ou même supérieurs aux valeurs obtenues par le R404A.

**Tableau 1**

| **Compositions** | | | **evap P (kpa)** | **cond P (kPa)** | **Taux (P/P)** | **T sortie comp** | **Capacité (KJ/m3)** | **COP** |
|---|---|---|---|---|---|---|---|---|
| **R404A** | | | 300 | 1829,00 | 6,10 | 76 | 1471 | 1,8 |
| | | | | | | | | |

| **1234yf** | **134a** | **32** | | | | | | |
|---|---|---|---|---|---|---|---|---|
| 10 | 50 | 40 | 226 | 1847 | 8,17 | 119 | 1426 | 1,9 |
| 20 | 40 | 40 | 236 | 1894 | 8,02 | 117 | 1457 | 1,8 |
| 30 | 30 | 40 | 247 | 1940 | 7,87 | 115 | 1490 | 1,8 |
| 40 | 20 | 40 | 257 | 1984 | 7,72 | 113 | 1522 | 1,8 |

Les performances des compositions selon la présente invention dans les conditions de fonctionnement de pompe à chaleur et climatisation sont données dans le Tableau 2. Les valeurs des constituants (1234yf/32/134a) pour chaque composition sont données en pourcentage en poids.

Pour le R407C, la pression nominale de fonctionnement est de 3442 kPa, la capacité volumétrique est de 1461 kJ/m³ et le COP est de 2,1 dans les conditions de fonctionnement suivantes :

| | |
|---|---|
| Température d'évaporation | : -5°C |
| Température de condensation | : 70°C |
| Température entrée compresseur | : 5°C |
| Température du liquide sous refroidi | : 65°C |
| Rendement isentropique du compresseur | : 70 % |

Evap P : pression à l'évaporateur
Cond P : pression au condenseur
Taux : le taux de compression
T sortie comp : température à la sortie compresseur
COP : coefficient de performance et est défini, lorsqu'il s'agit d'une pompe à chaleur, comme étant le rapport de la puissance chaude utile fournie par le système sur la puissance apportée ou consommée par le système.

Dans les mêmes conditions les compositions selon la présente invention fournissent une capacité supérieure à la capacité du R407C et permettent l'utilisation des installations de taille inférieure, la réduction de la quantité du fluide à mettre en oeuvre et aussi la réduction du coût de l'installation.

**Tableau 2**

| **Compositions** | | | **evap P (kpa)** | **cond P (kPa)** | **Taux (P/P)** | **T sortie comp** | **Capacité (KJ/m3)** | **COP** |
|---|---|---|---|---|---|---|---|---|
| **R407C** | | | 385,68 | 3442 | 8,93 | 126,60 | 1461 | 2,1 |
| | | | | | | | | |

| **1234yf** | **134a** | **32** | | | | | | |
|---|---|---|---|---|---|---|---|---|
| 60 | 0 | 40 | 478 | 3971 | 8 | 133 | 1503 | 1,9 |
| 10 | 50 | 40 | 408,43 | 3635 | 8,90 | 141,28 | 1671 | 2,2 |
| 20 | 40 | 40 | 424,91 | 3704 | 8,72 | 139,08 | 1655 | 2,1 |
| 30 | 30 | 40 | 441,27 | 3771 | 8,55 | 137,06 | 1635 | 2,1 |
| 40 | 20 | 40 | 456,56 | 3838 | 8,41 | 135,37 | 1607 | 2,1 |

## Revendications

1. Compositions contenant essentiellement de 5 à 65 % en poids, de préférence de 5 à 15 % en poids du 2,3,3,3 tetrafluoropropène, de 5 à 70 % en poids, de préférence de 40 à 60 % en poids du HFC-134a et de 25 à 42 % en poids du HFC-32.

2. Compositions selon la revendication 1 **caractérisées en ce qu'**elles comprennent 25 à 42 % en poids du HFC-32, de 30 à 55 % en poids du 2,3,3,3 tetrafluoropropène et de 20 à 35 % en poids du HFC-134a.

3. Compositions selon la revendication 1 **caractérisée en ce qu'**elle comprend de 40 % en poids du HFC-32, 10 % en poids du 2,3,3,3 tetrafluoropropène et 50 % en poids du HFC-134a.

4. Compositions selon l'une quelconque des revendications précédentes **caractérisées en ce qu'**elles comprennent de 40 % en poids du HFC-32, 40 % en poids du 2,3,3,3 tetraffuoropropène et 20 % en poids du HFC-134a.

5. Fluides de transfert de chaleur comprenant les compositions selon l'une quelconque des revendications précédentes.

6. Fluides de transfert de chaleur selon la revendication 5 **caractérisés en ce qu'**ils sont utilisés en réfrigération en remplacement du R404A et HCFC22.

7. Fluides de transfert de chaleur selon la revendication 5 **caractérisés en ce qu'**ils sont utilisés dans les systèmes à compression pour l'air conditionné et le chauffage.

8. Agents d'expansion comprenant les compositions selon l'une quelconque des revendications 1 à 4.

9. Solvants comprenant les compositions selon l'une quelconque des revendications 1 à 4.

10. Aérosols comprenant les compositions selon l'une quelconque des revendications 1 à 4.

11. Utilisation d'une composition comprenant de 5 à 65 % en poids, de préférence de 5 à 15 % en poids du 2,3,3,3 tetrafluoropropène, de 5 à 70 % en poids, de préférence de 40 à 60 % en poids du HFC-134a et de 25 à 42 % en poids du HFC-32 comme fluide de transfert de chaleur en réfrigération en remplacement du R404A et HCFC22.

## Patentansprüche

1. Zusammensetzungen, im Wesentlichen enthaltend 5 bis 65 Gew.-%, vorzugsweise 5 bis 15 Gew.-%, 2,3,3,3-Tetrafluorpropen, 5 bis 70 Gew.-%, vorzugsweise 40 bis 60 Gew.-%, H-FKW 134a und 25 bis 42 Gew.-% H-FKW 32.

2. Zusammensetzungen nach Anspruch 1, **dadurch gekennzeichnet, dass** sie 25 bis 42 Gew.-% H-FKW 32, 30 bis 55 Gew.-% 2,3,3,3-Tetrafluorpropen und 20 bis 35 Gew.-% H-FKW 134a umfassen.

3. Zusammensetzungen nach Anspruch 1, **dadurch gekennzeichnet, dass** sie 40 Gew.-% H-FKW 32, 10 Gew.-% 2,3,3,3-Tetrafluorpropen und 50 Gew.-% H-FKW 134a umfassen.

4. Zusammensetzungen nach einem der vorhergehenden Ansprüche, **dadurch gekennzeichnet, dass** sie 40 Gew.-% H-FKW 32, 40 Gew.-% 2,3,3,3-Tetrafluorpropen und 20 Gew.-% H-FKW 134a umfassen.

5. Wärmeübertragungsfluide, umfassend die Zusammensetzungen nach einem der vorhergehenden Ansprüche.

6. Wärmeübertragungsfluide nach Anspruch 5, **dadurch gekennzeichnet, dass** sie beim Kühlen als Ersatz für R404A und H-FCKW 22 verwendet werden.

7. Wärmeübertragungsfluide nach Anspruch 5, **dadurch gekennzeichnet, dass** sie in Verdichtungssystemen zum Klimatisieren und Erwärmen verwendet werden.

8. Treibmittel, umfassend die Zusammensetzungen nach einem der Ansprüche 1 bis 4.

9. Lösungsmittel, umfassend die Zusammensetzungen nach einem der Ansprüche 1 bis 4.

10. Aerosole, umfassend die Zusammensetzungen nach einem der Ansprüche 1 bis 4.

11. Verwendung einer Zusammensetzung, die 5 bis 65 Gew.-%, vorzugsweise 5 bis 15 Gew.-%, 2,3,3,3-Tetrafluorpropen, 5 bis 70 Gew.-%, vorzugsweise 40 bis 60 Gew.-%, H-FKW 134a und 25 bis 42 Gew.-% H-FKW 32 umfasst, als Wärmeübertragungsfluid beim Kühlen als Ersatz für R404A und H-FCKW 22.

## Claims

1. Compositions essentially containing from 5 to 65% by weight, preferably from 5 to 15% by weight, of 2,3,3,3-tetrafluoropropene, from 5 to 70% by weight, preferably from 40 to 60% by weight, of HFC-134a and from 25 to 42% by weight of HFC-32.

2. Compositions according to Claim 1, **characterized in that** they comprise from 25 to 42% by weight of HFC-32, from 30 to 55% by weight of 2,3,3,3-tetrafluoropropene and from 20 to 35% by weight of HFC-134a

3. Compositions according to Claim 1, **characterized in that** they comprise 40% by weight of HFC-32, 10% by weight of 2,3,3,3-tetrafluoropropene and 50% by weight of HFC-134a

4. Compositions according to any one of the preceding claims, **characterized in that** they comprise 40% by weight of HFC-32, 40% by weight of 2,3,3,3-tetrafluoropropene and 20% by weight of HFC-134a

5. Heat transfer fluids comprising the compositions according to any one of the preceding claims.

6. Heat transfer fluids according to Claim 5, **characterized in that** they are used in refrigeration as replacement for R404A and HCFC22.

7. Heat transfer fluids according to Claim 5, **characterized in that** they are used in compression systems for air conditioning and heating.

8. Blowing agents comprising the compositions according to any one of Claims 1 to 4.

9. Solvents comprising the compositions according to any one of claims 1 to 4.

10. Aerosols comprising the compositions according to any one of Claims 1 to 4.

11. Use of a composition comprising from 5 to 65% by weight, preferably from 5 to 15% by weight, of 2,3,3,3-tetrafluoropropene, from 5 to 70% by weight, preferably from 40 to 60% by weight, of HFC-134a and from 25 to 42% by weight of HFC-32 as heat transfer fluid in refrigeration as replacement for R404A and HCFC22.
